# EUROPEAN PATENT APPLICATION

(11) **EP 4 385 717 A1**
(43) Date of publication of application: **19.06.2024**
(21) Application number: 22212883.7
(22) Date of filing: 12.12.2022
(51) Int. Cl.: B29D 99/00, B29C 70/48, B29C 35/04, B29C 33/04

(54) **MOLD ARRANGEMENT AND METHOD FOR MANUFACTURING A WIND TURBINE BLADE**

(71) Applicant: Siemens Gamesa Renewable Energy A/S, 7330 Brande (DK)
(72) Inventor: Mimo, Matteo, 9530 Støvring (DK)
(74) Representative: SGRE-Association

(57) **Abstract**

A mold arrangement (8) for manufacturing a wind turbine blade (3) by resin (17) infusion of a fiber lay-up (16), the mold arrangement comprising a lower mold (9), an upper mold (10) for arrangement on the lower mold (9) such that an inner cavity (11) is formed between the molds (9, 10), and a mandrel (12) for arrangement in the inner cavity (11), wherein the mandrel (12) comprises a mandrel body (13) with a molding surface (14) and heating means (18) for providing heat at the molding surface (14).

By having the mandrel with the heating means for providing heat at the molding surface, a flow of resin and, thus, the resin infusion process can be improved. Furthermore, also a faster and better curing process of the resin can be achieved.

## Description

The present invention relates to a mold arrangement for manufacturing a wind turbine blade and a method for manufacturing a wind turbine blade.

Wind turbine blade shells are usually made of fiber-reinforced resin. To cast the shell, a fiber lay-up is arranged in a mold and infused with resin, for example by a vacuum-assisted infusion process. The resin is then cured to form the blade shell. The quality of both the resin infusion and the curing process plays an essential role for the structural integrity of the manufactured blade.

It is one object of the present invention to provide an improved mold arrangement for manufacturing a wind turbine blade and an improved method for manufacturing a wind turbine blade.

Accordingly, a mold arrangement for manufacturing a wind turbine blade by resin infusion of a fiber lay-up is provided. The mold arrangement comprises a lower mold, an upper mold for arrangement on the lower mold such that an inner cavity is formed between the molds, and a mandrel for arrangement in the inner cavity. Further, the mandrel comprises a mandrel body with a molding surface and heating means for providing heat at the molding surface.

Having the mandrel with the heating means for providing heat at the molding surface, a temperature at the molding surface can be controlled. Since the fiber lay-up is arranged at the molding surface, using the heating means, a temperature of the resin wetting the fiber lay-up can be increased. Further, also the temperature-dependent curing of the resin can be improved.

In particular, the quality of the resin infusion process depends on a uniform wetting of the dry and/or semi-dry fiber lay-up. Thereby, air pockets due to entrapped air as well as dry regions due to insufficient resin flow should be avoided. The viscosity of the resin and, hence, the resin flow is a function of the temperature of the resin. Controlling the resin temperature by providing heat at the molding surface of the mandrel - for example before and/or during infusion of resin - the resin flow can be improved.

Furthermore, also the quality of the process of curing the resin depends on the temperature of the resin. The curing process of thermosetting resin, such as epoxy resin, from the liquid state - in which it can be applied - to the solid state
- in which the resin has reached (most of its) ultimate mechanical properties - is characterized by gelation and vitrification (glass transition). The curing process is temperature-dependent. The higher the temperature of the resin, the faster it cures. The temperature of the resin depends on the ambient temperature as well as the temperature of the surface where the resin is applied. In addition, the curing of resin can generate heat by itself. In particular, curing of epoxy resin involves an exothermic reaction in which molecules of the epoxy mixture chemically react with each other and generate heat. The amount of heat depends on the thickness of the epoxy mass or the exposed surface area of mixed epoxy. A thicker mass retains more heat, causing a faster reaction and even more heat. Controlling the resin temperature by providing heat at the molding surface of the mandrel - for example during and/or after the infusion of resin - the curing of the resin can be improved.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected via a transition piece to a foundation of the wind turbine, such as a monopile in the seabed or a concrete foundation.

The wind turbine blade, e.g., its root section, is fixedly or rotatably connected to the hub. Apart from a (cylindrical) root section, the wind turbine blade is formed aerodynamically. The wind turbine blade comprises, for example, a pressure side (up-wind side) and a suction side (downwind side). The pressure side and the suction side are connected with each other at a leading edge and a trailing edge. The pressure and suction sides and the leading and trailing edges define an airfoil of the wind turbine blade.

The wind turbine blade has a fiber-reinforced laminate structure. The wind turbine blade is manufactured by arranging the fiber lay-up in the lower and upper molds and at the molding surface of the mandrel, infusing the fiber lay-up with resin, and curing the resin.

In particular, fiber lay-up arranged in the lower mold is con-figured to become - in the cured state of the resin - a lower shell of the blade. Further, fiber lay-up arranged in the upper mold is configured to become - in the cured state of the resin - an upper shell of the blade. The lower shell of the blade is, for example, a pressure side of the blade and the upper shell of the blade is, for example, a suction side of the blade, or vice versa.

The mandrel may, for example, comprise two or more mandrel portions. The mandrel comprises, for example, a leading-edge mandrel portion and a trailing edge mandrel portion. In case of the mandrel comprising two or more mandrel portions, fiber lay-up may also be arranged between the mandrel portions. For example, fiber lay-up arranged between the leading-edge mandrel portion and the trailing-edge mandrel portion may be configured to become - in the cured state of the resin - a shear web or part of a shear web of the blade.

The shear web connects the blade shells of the pressure side and the suction side in the interior cavity of the manufactured blade. The shear web provides shear strength to the blade.

The wind turbine blade may also include more than one shear web. In this case, the mold arrangement may include more than two mandrel portions, a gap between each of two neighboring mandrel portions being configured for molding one of the shear webs.

In addition to the dry or semi-dry fiber lay-up also core material - such as wood, balsa, foam, e.g. PET foam and/or PU foam - may be arranged in the lower mold, the upper mold, on the mandrel surface and/or between mandrel portions. The core material may be sandwiched between layers of fibers such that a fiber-reinforced resin laminate with a core structure is obtained.

Moreover, in addition to the dry or semi-dry fiber lay-up also one more pre-cast elements may be arranged in the lower mold, the upper mold, on the mandrel surface and/or between mandrel portions. In this case, the pre-cast elements and the dry and/or semi-dry fiber lay-up may be connected with each other by the resin infusion and curing process. For example, the fiber lay-up and at least a connection region of the pre-cast element and the fiber lay-up are infused with resin to establish the connection.

Pre-cast elements include, for example, a pre-cast (shear) web, a pre-cast (reinforcement) beam (e.g., a spar cap, a leading-edge beam, a trailing-edge beam or another beam), a pre-cast root section and/or a pre-cast tip.

Heating the mandrel by use of the heating means is particularly advantageous for improving the curing process in the case of pre-cast elements added to the fiber lay-up.

Pre-cast elements are arranged in the blade mold as already cured components. When arranged in the mold, pre-cast elements usually have room temperature or even a temperature below room temperature (e.g., in case they have been stored beforehand in a separate environment from the blade mold and/or in case an acclimatization period is short). Hence, these pre-cast elements will act as thermal mass during the curing cycle. For example, a percentage of heat produced by exothermic reaction during curing of the resin will be transferred to the pre-cast elements by virtue of a temperature difference. Furthermore, in an area in close vicinity to the pre-cast elements, usually only a few layers of fibers are placed to enclose the pre-cast elements and integrate them into the overall blade shell. As the thickness and volume of resin will be low in this area, an exotherm reaction will only generate a small amount of heat.

Providing extra heat by use of the heating means of the mandrel, a full curing cycle and reaching of the required minimal glass transition temperature of the applied resin can be ensured.

The wind turbine blade may be manufactured in one piece. In this case, fiber lay-up for the entire blade is arranged in the upper and lower molds and infused with resin and cured.

Alternatively, the wind turbine blade may be manufactured by pre-manufacturing two or more sections and connecting the sections with each other to form the full blade. Connecting the pre-manufactured blade sections with each other can be performed by any suitable means - such as gluing, resin infusion (laminate joint), welding etc. - to form the full blade.

For example, the wind turbine blade may be manufactured by pre-manufacturing two or more lengthwise blade sections (e.g., an inboard blade section and an outboard blade section). In this case, fiber lay-up for a first lengthwise blade section is arranged in the lower and upper molds and infused with resin and cured. Then, fiber lay-up for a further lengthwise blade section is arranged in the upper and lower molds (or in further upper and lower molds) and infused with resin and cured.

The fiber lay-up arranged in the lower and upper molds and at the molding surface of the mandrel includes, for example, fibers in a dry condition (i.e. without any resin), semi-dry fibers and/or pre-impregnated fibers (prepreg).

The fiber lay-up includes, for example, glass fibers, carbon fibers, aramid fibers and/or natural fibers.

The resin is infused into the fiber lay-up, in particular, in a vacuum-assisted manner. For example, the fiber lay-up is covered with one or more vacuum bags and a vacuum is generated in a space covered by the vacuum bag. The resin is then infused into this space due to the generated vacuum, and is, thus, wetting the fibers.

The resin includes, for example, thermosets, thermoplastics, epoxy, polyurethane, vinyl ester and/or polyester.

The resin is, for example, cured by applying heat by means of the heating means of the mandrel. The result is a fiber-reinforced resin laminate.

The mandrel (or each one of several mandrel portions of the mandrel) comprise a mandrel body surrounded by an outer molding surface. The mandrel body comprise, for example, a core portion (e.g., a steel core portion) and a foam portion covering the core portion. The foam portion includes, for example, PU foam (PUR foam), PET foam and/or PVC foam.

The mandrel (or each one of several mandrel portions of the mandrel) comprise the heating means. The heating means are arranged, for example, at least partially inside the mandrel body. The heating means are arranged, for example, at least partially inside the foam portion of the mandrel body.

The mold arrangement is, in particular, configured for manufacturing a blade shell of a wind turbine.

The mold arrangement is, for example, configured for manufacturing a wind turbine blade by resin infusion of a fiber lay-up and one or more pre-cast elements.

The upper mold is, in particular, arranged on the lower mold such that a closed inner cavity is formed. Hence, the infusion and curing of the resin is performed in a closed state of the lower and upper molds.

Providing heat at the molding surface of the mandrel includes, for example, heating (e.g., actively and/or directly) the molding surface and/or heating (e.g., actively and/or directly) a gas volume in a gap between the molding surface of the mandrel and another molding surface of the mold arrangement (e.g., a molding surface of another mandrel portion, a molding surface of the upper mold and/or a molding surface of the lower mold).

The heating means are, for example, configured for providing heat at the molding surface of the mandrel by heat convection or by heat conduction.

According to an embodiment, the heating means comprise one or more energy lines arranged at least partially inside the mandrel body, and the one or more energy lines are configured for supplying energy towards the molding surface for providing heat at the molding surface.

The one or more energy lines are, for example, configured for supplying electrical energy (power) or heat towards (e.g., to) the molding surface. The one or more energy lines include, for example, one or more electrically conductive wires for conducting an electrical current or one or more (e.g., hollow) pipes for transporting a heating medium such as a heating fluid (e.g., liquid or gas).

The one or more energy lines may, for example, be arranged completely inside the mandrel body apart from inlet(s) and outlet(s) or connection terminals.

According to a further embodiment, the heating means comprise one or more pipes arranged at least partially inside the mandrel body, and the one or more pipes are configured for transporting a heating medium towards the molding surface.

By using - as the one or more energy lines - one or more pipes, heating can be realized by supplying a heating medium through the one or more pipes.

The one or more pipes are, for example, hollow pipes.

The heating medium is, in particular, a heating fluid such as a gaseous medium (e.g., air) or a liquid medium (e.g., water) .

According to a further embodiment, the heating medium is a gaseous medium, and the one or more pipes comprise at least one outlet at the molding surface for releasing the gaseous heating medium at the molding surface.

Thus, the molding surface and/or the resin at the molding surface can be heated by generating a warm/hot gas stream (e.g., air stream). Hence, the molding surface and/or the resin can be heated by convection.

The outlet is, for example, configured for releasing the gaseous heating medium into a gap between the molding surface of the mandrel and a further molding surface of the mold arrangement. The further molding surface of the mold arrangement is, for example, a molding surface of the lower mold and/or a molding surface of the upper mold. In the case that the mandrel comprises two or more mandrel portions, the gap may be formed between molding surfaces of two adjacent mandrel portions.

Further, the one or more pipes comprise, for example, an inlet for fluid connection with a gas supply device. The inlet is, for example arranged at a further surface of the mandrel, in particular at a non-molding surface of the mandrel.

In embodiments, the mold arrangement comprises the gas supply device fluidly connected to the inlet of the one or more pipes. The gas supply device is, for example, arranged outside of the lower and upper molds in their closed state, i.e. outside with respect to the inner cavity of the molds.

In embodiments, the one or more pipes comprise multiple outlets (e.g., three or more, four or more, five or more, nine or more and/or ten or more) arranged at the molding surface of the mandrel for releasing heated gas at the molding surface. The multiple outlets are, for example, arranged evenly distributed in a heating region of the molding surface.

In embodiments, the heating medium is a gaseous medium and the heating means comprise one or more discharge pipes arranged at least partially inside the mandrel body. Further, each of the one or more discharge pipes comprise at least one inlet at the molding surface for intake of the gaseous heating medium. Each of the one or more discharge pipes may also comprise, for example, multiple inlets at the molding surface (e.g., three or more, four or more, five or more, nine or more and/or ten or more inlets). Moreover, each of the one or more discharge pipes may comprise an outlet for discharging the gaseous heating medium to the outside of the molds. The outlet of the one or more discharge pipes are, for example, arranged at a further surface of the mandrel, in particular at a non-molding surface of the mandrel.

In embodiments, the lower mold and/or the upper mold comprise/s one or more first through holes corresponding to the inlet(s) of the one or more (supply) pipes of the mandrel, and one or more second through-holes corresponding to the outlet(s) of the one or more discharge pipes of the mandrel.

According to a further embodiment, the heating medium is a liquid medium, the one or more pipes form at least one closed heating circuit for heating a heating zone of the mandrel, and the heating zone includes at least a portion of the molding surface.

Thus, the molding surface can be heated by a liquid (e.g., water) pipe circuit embedded and/or cast into the mandrel structure. The molding surface of the mandrel is heated by heat exchange from hot liquid (e.g., water) circulating inside the circuit.

The heating zone is, for example, a three-dimensional heating zone. The heating zone is, for example, a (e.g., three-dimensional) portion of the mandrel body.

According to a further embodiment, the one or more pipes comprise multiple branches, bending portions and/or serpentine portions in a heating zone of the mandrel, and the heating zone includes at least a portion of the molding surface.

Having the one or more pipes arranged in the mandrel body with multiple branches, bending portions and/or serpentine portions, a larger heating zone of the mandrel can be heated.

In the case of a gaseous heating medium, each branching pipe portion may, for example, comprise at least one outlet for releasing heat at the molding surface.

The bending portions and/or serpentine portions may, for example, include multiple S-shaped pipe portions.

According to a further embodiment, the heating means comprise one or more electrically conductive wires arranged at least partially inside the mandrel body, and an electrical heating element arranged at the molding surface of the mandrel. Further, the one or more electrically conductive wires are electrically connected with the electrical heating element for supplying power to the electrical heating element.

Thus, the molding surface can be heated by electrical power. The one or more electrically conductive wires are an example of the one or more energy lines.

The one or more electrically conductive wires are configured for electrical connection with a power supply device.

The electrical heating element is configured for generating heat when supplied with power.

The electrical heating element is, for example, attached to the molding surface and/or exposed at the molding surface.

The heating element may, for example, have a plate-shape, a mat-shape, a pad-shape and/or a blanket-shape.

The heating means may, for example, comprise more than one electrical heating element.

In embodiments, the mold arrangement comprises the power supply device. The power supply device is, for example, arranged outside the lower and upper molds in the closed state, i.e. outside with respect to the inner cavity of the molds.

According to a further embodiment, the electrical heating element includes a resistive element, a silicon element and/or a graphite element.

By having the resistive element, heat is generated by resistive heating. In particular, when electrical current flows through the heating element, heat is generated by Joule's law (i.e., energy dissipated from the heating element is proportional to the resistance of the heating element, current and elapsed time). The resistive element includes, for example, an electrically conductive plate, an electrically conductive mesh and/or electrically conductive wires (e.g., arranged in a serpentine-shape and/or in a coil-shape). The electrically conductive wires of the resistive element may, for example, be casted in resin.

By having the silicon element, heat is generated by a silicon heater.

The silicon element comprises, for example, a silicon layer, silicon blanket, silicon mat and/or silicon pad. The silicon element comprises, for example, silicon rubber. The silicon element is, for example, flexible. The silicone heating element includes, for example, an etched foil and/or a wire wound heating element.

By having the graphite element, heat is generated by a graphite heater.

The graphite element comprises, for example, high purity graphite. Advantages of a graphite element are that it is highly inert and that the material increases in strength with increasing temperature. Furthermore, graphite material has a low expansion coefficient and is resistant to degrading due to constant heat cycling.

According to a further embodiment, the mold arrangement comprises:
a control unit for controlling an amount of heat supplied by the heating means, and/or
a sensor unit for determining a temperature of the mandrel, wherein preferentially the control unit is configured to control the amount of heat supplied by the heating means based on the determined temperature and/or based on a predetermined glass transition temperature of the resin.

The control unit is, in particular, configured for controlling the amount of heat provided at the molding surface of the mandrel.

The control unit is, for example, configured for controlling the gas supply device, the liquid supply device, the power supply device, the silicon heater and/or the graphite heater.

The sensor unit comprises, for example, one or more temperature sensors. Determining a temperature of the mandrel includes, for example, determining a temperature of the molding surface of the mandrel, a temperature of the mandrel body and/or a temperature of the one or more pipes of the heating means.

According to a further aspect, a method for manufacturing a wind turbine blade is provided. The method comprises the steps:
a) arranging a mandrel and an upper mold on a lower mold such that the mandrel is arranged in an inner cavity formed between the molds, the mandrel comprising a mandrel body with a molding surface and heating means, and a fiber lay-up being arranged at the molding surface,
b) providing heat at the molding surface by the heating means of the mandrel,
c) infusing the fiber lay-up with resin, and
d) curing the resin.

Step b) can be carried out before step c), during step c), after step c), before step d) and/or during step d).

Step c) can include applying vacuum to a space between the upper and lower molds and the mandrel and infusing the fiber lay-up with resin by vacuum infusion.

According to an embodiment of the further aspect, the method comprises the step of determining a temperature of the mandrel, the temperature of the mandrel being determined before and/or during step b).

According to a further embodiment of the further aspect, the method comprises the step of controlling an amount of heat supplied by the heating means based on the determined temperature of the mandrel and/or based on a predetermined glass transition temperature of the resin.

Controlling an amount of heat supplied by the heating means may comprise determining a control scheme, a curing cycle and/or controlling an amount of heat supplied by the heating means as a function of time.

According to a further embodiment of the further aspect, the heating means comprise one or more energy lines arranged at least partially inside the mandrel body, and the heat is provided in step b) by supplying energy through the one or more energy lines towards the molding surface.

According to a further embodiment of the further aspect, the heating means comprise one or more pipes and/or electrically conductive wires arranged at least partially inside the mandrel body. Furthermore, the heat is provided in step b) by:
transporting a heating medium through the one or more pipes towards the molding surface,
transporting a gaseous heating medium through the one or more pipes and releasing it at an outlet at the molding surface,
transporting a liquid heating medium through the one or more pipes, the one or more pipes forming at least one closed heating circuit, and/or
supplying power through the one or more electrically conductive wires to an electrical heating element arranged at the molding surface.

According to a further embodiment of the further aspect,
in step a) a pre-cast element is arranged at the molding surface and in contact with the fiber lay-up,
in step b) heat is provided at a heating region of the molding surface, the pre-cast element being arranged adjacent to the heating region, and
in step c) the fiber lay-up and at least a connection region of the pre-cast element and the fiber lay-up are infused with resin.

The respective entity, e.g., the control unit, may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

According to a further aspect, the invention relates to a computer program product comprising a program code for executing at least the step of controlling an amount of heat of the above-described method when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the mold arrangement of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows, in a cross-section view, a mold arrangement for manufacturing a blade of the wind turbine of Fig. 1, according to an embodiment;
Fig. 3 shows, in a cross-section view, a further embodiment of a mold arrangement for manufacturing a blade of the wind turbine of Fig. 1;
Fig. 4 shows a perspective view of a mandrel portion of a mandrel of the mold arrangement of Fig. 3, according to an embodiment;
Fig. 5 shows a view similar as Fig. 4 but with heating means of the mandrel comprising discharge pipes;
Fig. 6 shows a perspective view of a mandrel portion of a mandrel of the mold arrangement of Fig. 3, according to a further embodiment;
Fig. 7 shows a perspective view of a mandrel portion of a mandrel of the mold arrangement of Fig. 3, according to a further embodiment; and
Fig. 8 shows a flow chart illustrating a method for manufacturing a blade of the wind turbine of Fig. 1.

In the Figures, like reference numerals designate like or functionally equivalent elements, unless otherwise indicated.

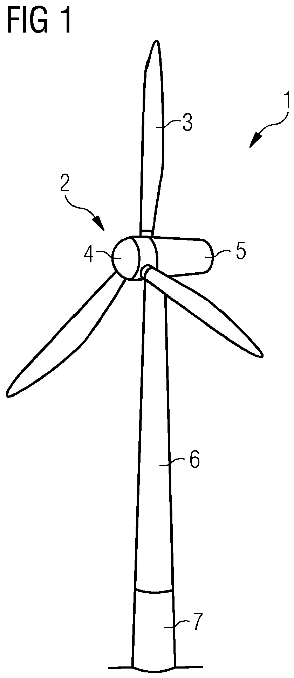

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

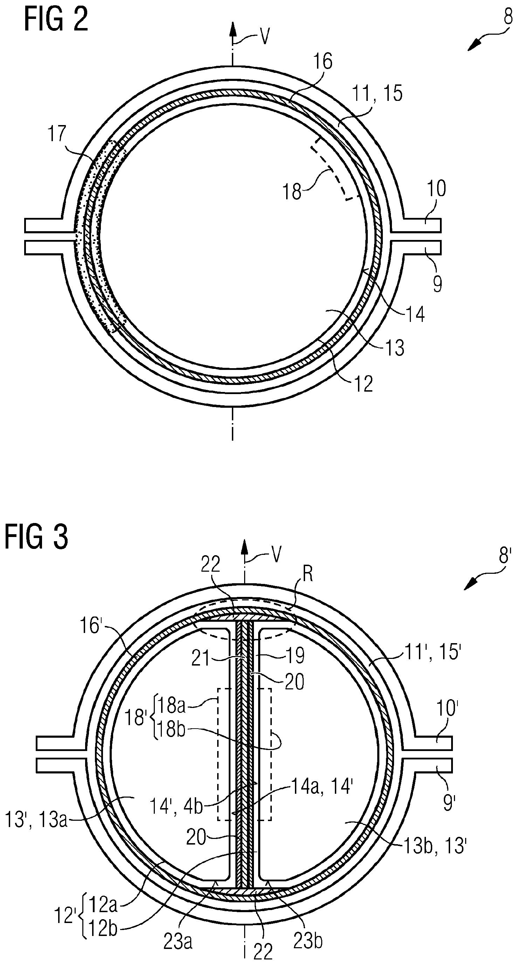

In the following, an improved mold arrangement and method for manufacturing a wind turbine blade 3 is described with respect to Figs. 2 to 8.

Fig. 2 shows a mold arrangement 8 in cross-section for manufacturing one of the wind turbine blades 3 of Fig. 1. The mold arrangement 8 comprises a lower mold 9 and an upper mold 10. In the closed state of the mold arrangement 8 shown in Fig. 2, the upper mold 10 is arranged on the lower mold 9 such that an inner cavity 11 is formed. The mold arrangement 8 further comprises a mandrel 12 arranged inside the cavity 11 formed by the lower and upper molds 9, 10. The mandrel 12 is, hence, a mold core. The mandrel 12 comprises a mandrel body 13 surrounded by an outer surface 14 which is a molding surface 14 of the mandrel 12.

In the closed state of the mold arrangement 8, a gap 15 is formed between the lower and upper molds 9, 10 and the mandrel 12 for molding a shell of the blade 3.

The reference sign V denotes a vertical direction V of the molds 9, 10 in the closed state of the molds 9, 10 (i.e. in the closed state of the mold arrangement 8). The vertical direction V is, in particular, pointing during the molding process from the lower mold 9 to the upper mold 10.

The gap 15 is configured for accommodating a fiber lay-up 16 for molding lower and upper shells of the blade 1.

As illustrated in Fig. 2, the fiber lay-up 16 is infused with resin 17. Then, the resin 17 is cured for forming a fiber-reinforced resin laminate (e.g., the lower and upper blade shells).

Further, the mandrel 12 comprises heating means 18 for providing heat at the molding surface 14. By use of the heating means 18, the molding surface 14 of the mandrel 12 and/or a gas volume in the gap 15 can be actively heated. Therefore, the heating means 18 can be applied to improve the temperature-dependent resin infusion process and/or the temperature-dependent curing process of the resin 17. For example, by heating the molding surface 14 of the mandrel 12 before or during infusion of liquid resin 17, a temperature of the resin 17 can be increased and, hence, a viscosity of the resin 17 decreased. Thus, a flow of the resin 17 can be improved. Further, by heating the molding surface 14 of the mandrel 12 after the resin infusion, a curing process (gelation, vitrification) of the resin 17 can be accelerated.

Fig. 3 shows a further embodiment of a mold arrangement 8' for manufacturing one of the wind turbine blades 3 of Fig. 1. Similar as the mold arrangement 8 (Fig. 2), the mold arrangement 8' (Fig. 3) comprises a lower mold 9' and an upper mold 10' which form in the closed state an inner cavity 11'. The mold arrangement 8' further comprises a mandrel 12' arranged inside the cavity 11'. In contrast to the mold arrangement 8 of Fig. 2, the mandrel 12' in the embodiment of Fig. 3 comprises two mandrel portions 12a, 12b (first mandrel portion 12a, second mandrel portion 12b). It is noted that in other embodiments - although not shown in the figures - a mold arrangement may also comprise more than two mandrel portions.

Each of the mandrel portions 12a, 12b comprises a mandrel body 13a, 13b surrounded by an outer surface 14a, 14b which is a molding surface 14a, 14b of the respective mandrel portion 12a, 12b.

In the closed state of the mold arrangement 8', a gap 15' is formed between the lower and upper molds 9', 10' and the mandrel portions 12a, 12b for molding an upper and lower shell of the blade 3.

Furthermore, in the closed state of the mold arrangement 8', a further gap 19 is formed between the first and second mandrel portions 12a, 12b for molding a shear web of the blade 3. The further gap 19 is defined by mating outer molding surfaces 14a and 14b of the first and second mandrel portions 12a, 12b, respectively. The further gap 19 extends in the vertical direction V of the molds 9', 10' in the closed state of the mold arrangement 8'.

The gap 15' is configured for accommodating a fiber lay-up 16' for molding the lower and upper shells of the blade 3. The further gap 19 is configured for accommodating a fiber lay-up 20 and, for example, a pre-cast web element 21 for molding a shear web of the blade 3. Further exemplarily shown in Fig. 3 are two pre-cast beams 22 arranged in the lower and upper molds 9', 10', respectively. The two pre-cast beams 22 are configured to become - in the manufactured state of the blade 3 - spar caps of the blade 3, the spar caps being connected to the shear web (see pre-cast web element 21).

The fiber lay-up 16', 20 is infused with resin 17 (Fig. 2). Although not shown in the figures, a vacuum bag may be provided such that it covers and encloses the fiber lay-up 16', 20. Further, the resin 17 may be infused in a vacuum-assisted manner.

In case that a pre-cast element 21, 22 is used, the fiber lay-up 16', 20 and at least a connection region R of the pre-cast element 21, 22 and the fiber lay-up 16', 20 are infused with resin 17.

Then, the resin 17 is cured for forming a fiber-reinforced resin laminate (i.e., a lower and upper shell, the shear web and the connection of the shear web with the spar caps and the lower and upper shell).

In order to improve a resin infusion and/or curing process, also the mandrel 12' according to the embodiment of Fig. 3 comprises heating means 18' for providing heat at a molding surface of the mandrel 12'. For example, each of the mandrel portions 12a, 12b of the mandrel 12' comprises heating means 18a, 18b. In the shown example of Fig. 3, the heating means 18a, 18b are arranged such that heat can be provided at the mating molding surfaces 14a, 14b of the mandrel portions 12a, 12b. Hence, heat can be provided in the vicinity of the pre-cast web element 21. This is of particular advantage because the pre-cast web element 21 will act as a thermal mass in the curing process and generation of exothermic heat in the area of the pre-cast web element 21 will be low.

Although not shown in Fig. 3, the mandrel 12' (i.e., the mandrel portions 12a, 12b) may also comprise heating means - similar as the heating means 18' - arranged close to the pre-cast beams 22 configured to become spar caps of the blade 3. In this case, heat can also be provided at a molding surface 23a, 23b of the mandrel portions 12a, 12b in order to improve the curing process in the vicinity of the pre-cast beams 22. Note that in Fig. 3, only molding surface 23a, 23b of the mandrel portions 12a, 12b close to the lower one of the pre-cast beams 22 have been denoted with a reference sign for illustrative purposes.

Furthermore, the mandrel 12' (or the mandrel 12 in Fig. 2) may comprise further heating means than the one shown in the figures or the shown heating means 18, 18' may be arranged at other portions of the molding surface 14, 14', 23a, 23b.

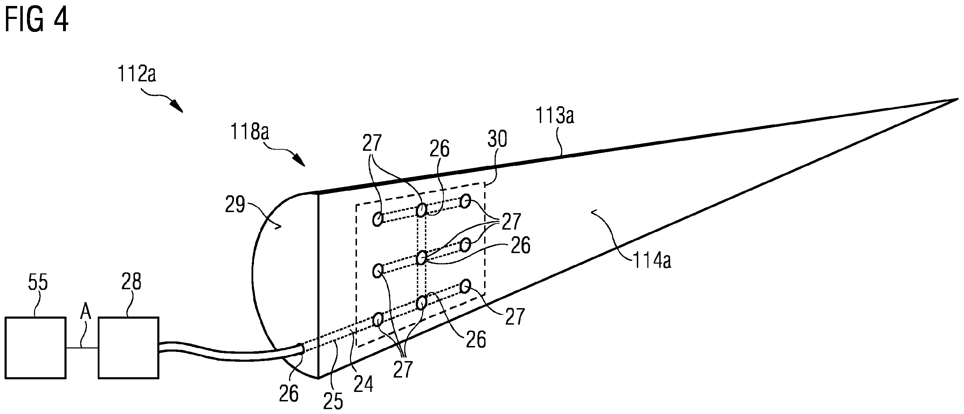

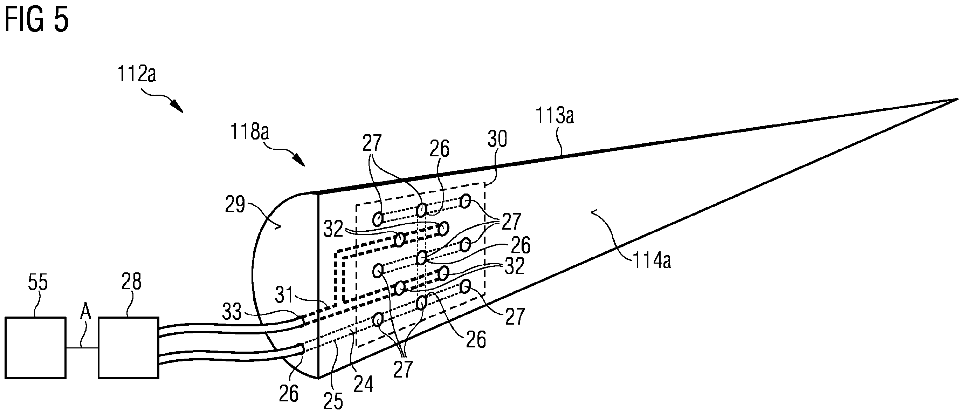

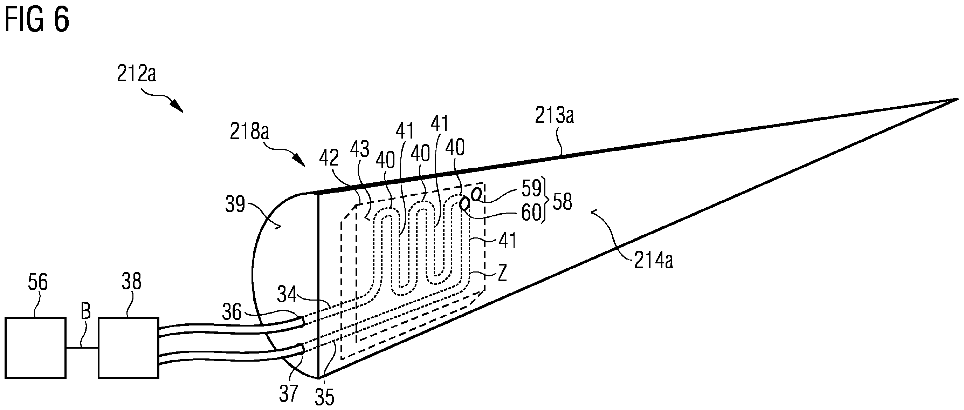

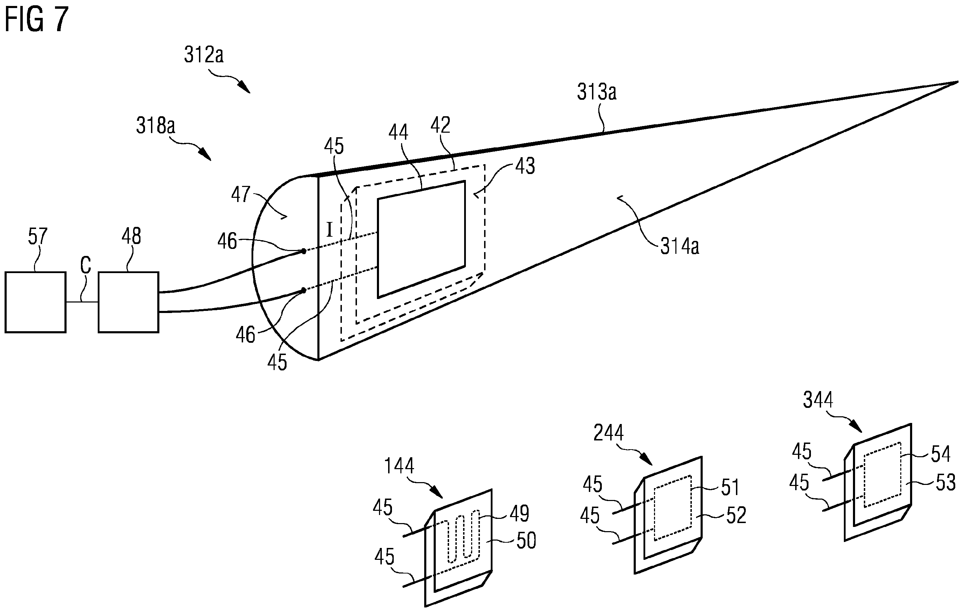

In Figs. 4 to 7, heating means 118a, 218a, 318a according to a first to third embodiment are shown. In the first embodiment, heat is provided based on heated gas such as heated air (Figs. 4, 5). In the second embodiment, heat is provided based on a heated liquid such as heated water circulating in a heating circuit (Fig. 6). In the third embodiment, heat is provided based on an electrically heated heating element (Fig. 7).

The heating means 118a, 218a, 318a according to the first to third embodiment each comprise one or more energy lines 25, 35, 45 arranged at least partially inside a mandrel body 113a, 213a, 313a. Further, the one or more energy lines 25, 35, 45 are configured for supplying energy (e.g., heated gas, heated liquid or power) towards the molding surface 114a, 214a, 314a for providing heat at the molding surface 114a, 214a, 314a.

In Figs. 4 to 7, exemplarily heating means 118a, 218a, 318a of a mandrel portion 112a, 212a, 312a similar to the mandrel portion 12a of Fig. 2 are shown. However, the heating means 118a, 218a, 318a described in the following with respect to Figs. 4 to 7 can be arranged at any molding surface 14, 14a, 14b, 23a, 23b of any mandrel 12, 12' and/or any mandrel portion 12a, 12b described herein.

Fig. 4 illustrates the heating means 118a according to the first embodiment in which heat is provided based on heated gas 24 (e.g., heated air). The heating means 118a comprise one or more pipes 25 for transporting the heating gas 24 towards the molding surface 114a. In Fig. 4, exemplarily one pipe 25 with several branches 26 and branching pipe portions (without reference signs) are shown. However, the heating means 118a may also comprise more than one pipe 25.

The one or more pipes 25 are arranged at least partially inside the mandrel body 113a. In Fig. 4, the pipe 25 is arranged completely inside the mandrel body 113a apart from an inlet 26 and outlets 27. In particular, the pipe 25 comprise an inlet 26 for fluid connection with a gas supply device 28 (gas heating device 28). The inlet 26 is, for example, arranged at a further surface 29, e.g., non-molding surface 29, of the mandrel 112a. The gas supply device 28 comprises, for example, a heating unit for heating the gas and a blower unit for providing the gas pressure necessary to transport the gas 24 through the pipe 25. The gas supply device 28 is arranged outside of the lower and upper molds 9', 10' in their closed state, i.e. outside with respect to the inner cavity 11' (Fig. 3) of the lower and upper molds 9', 10'.

Furthermore, the one or more pipes 25 comprise at least one outlet 27 at the molding surface 114a for releasing the heated gas 24 at the molding surface 114a. In the example of Fig. 4, the pipe 25 comprises multiple outlets 27; exemplarily nine outlets 27 are shown. The multiple outlets 27 are, for example, arranged evenly distributed in a heating region 30 of the molding surface 114a.

As shown in Fig. 5, the heating means 118a may optionally comprise one or more discharge pipes 31 arranged at least partially inside the mandrel body 113a. In Fig. 5 one discharge pipe 31 is shown as an example. Each of the one or more discharge pipes 31 comprise at least one inlet 32 at the molding surface 114a for intake of gas 24. In Fig. 5, exemplarily four inlets 32 are shown. Further, each of the one or more discharge pipes 31 comprises an outlet 33 for discharging the gas 24 to the outside of the molds 9', 10'. The outlet 33 is, for example, arranged at the further surface 29 of the mandrel 112a. Optionally, the outlet 33 may be fluidly connected to the gas supply device 28.

Fig. 6 illustrates the heating means 218a according to the second embodiment in which heat is provided based on heated liquid 34 (e.g., heated water). The heating means 218a comprise one or more pipes 35 for transporting the heating liquid 34 towards the molding surface 214a. The one or more pipes 35 form at least one closed heating circuit Z. In Fig. 6, exemplarily one pipe 35 forming one closed heating circuit Z is shown. However, the heating means 218a may also comprise more than one pipe 35 and/or form more than one closed heating circuit Z.

The one or more pipes 35 are arranged at least partially inside the mandrel body 213a. In Fig. 6, the pipe 35 is arranged completely inside the mandrel body 213a apart from an inlet 36 and an outlet 37. In particular, the pipe 35 comprise an inlet 36 for fluid connection with a liquid supply device 38 (liquid heating device 38). The inlet 36 is, for example, arranged at a further surface 39, e.g., non-molding surface 39, of the mandrel 212a. The liquid supply device 38 comprises, for example, a heating unit for heating the liquid 34 and a pumping unit for providing the required flow rate to transport the liquid 34 through the pipe 35. The liquid supply device 38 is arranged outside of the lower and upper molds 9', 10' (Fig. 3) in their closed state, i.e. outside with respect to the inner cavity 11' of the lower and upper molds 9', 10'.

The pipe 35 comprises, for example, multiple bending portions 40 and/or serpentine portions 41 so as to heat a larger heating zone 42 of the mandrel body 213a. The heating zone 42 incudes, in particular, a portion of the molding surface 214a. The portion of the molding surface 214a which is part of the heating zone 42 is also called heating region 43 of the molding surface 214a.

Fig. 7 illustrates the heating means 318a according to the third embodiment in which heat is provided based on an electrically heated heating element 44. The heating means 318a comprise one or more electrically conductive wires 45 for supplying power I (electrical current) to the heating element 44. In Fig. 7, exemplarily one heating element 44 is shown. However, the heating means 318a may also comprise more than one heating element 44.

The electrically conductive wires 45 comprise terminals 46 for electrical connection with a power supply device 48. The terminals 46 are, for example, arranged at a further (e.g., non-molding) surface 47 of the mandrel portion 312a. The power supply device 48 is arranged outside of the molds 8', 9' and the cavity 11' (Fig. 3).

The heating element 44 is attached to the molding surface 314a. In particular, the heating element 44 is exposed at the molding surface 314a.

The heating element 44 is configured for transforming electrical current into heat. As shown in the insets of Fig. 7, the heating element 144 includes, for example, a resistive heating element 49. The resistive heating element 49 includes, for example, one or more electrically conductive wires 49. The one or more electrically conductive wires 49 are, for example, casted in resin 50. Further, the heating element 244 may include, for example, a silicon layer 51 and/or a silicon heater 52. Furthermore, the heating element 244 may include, for example, a graphite element 53 and/or a graphite heater 54.

Optionally, the mold arrangement 8, 8' (Figs. 2, 3) may further comprise a control unit 55, 56, 57 (Figs. 4 to 7)for controlling an amount of heat provided by the heating means 18, 18', 118a, 218a, 318a. The control unit 55, 56, 57 may, for example, determine the required temperature of the molding surface 14, 14', 114a, 214a, 314a and/or the required temperature of the gas volume in the gap 15, 15', 19 (Fig. 3). The control unit 55, 56, 57 sends, for example, a control signal A, B, C to the respective supply unit 28, 38, 48 for controlling the supply of heated gas 24, heated liquid 34 or power I of the respective supply unit 28, 38, 48 to the heating means 18, 18' 118a, 218a, 318a of the mandrel (portion) 12, 12', 112a, 212a, 312a.

The control unit 55, 56, 57 may, for example, determine the required amount of heat to be provided by the heating means 18, 18', 118a, 218a, 318a based on a predetermined glass transition temperature of the resin 17. The control unit 55, 56, 57 may, for example, determine a control scheme (control recipe) including different time periods with different amounts of provided heat and/or different timely evolutions of provided heat.

As shown exemplarily in Fig. 6 for the heating means 218a, the heating means 18, 18', 118a, 218a, 318a may further comprise a sensor unit 58 for determining a temperature of the mandrel (portion) 12, 12', 12a, 12b, 112a, 212a, 312a. The sensor unit 58 may comprise one or more sensors 59, 60. In the example of Fig. 6, one sensor 59 is arranged in the heating zone 42 of the mandrel body 213a. Another sensor 60 is arranged in the pipe 35.

In the case that the heating means 18, 18', 118a, 218a, 318a comprise a sensor unit 58 for determining a temperature of the mandrel (portion) 12, 12', 12a, 12b, 112a, 212a, 312a, the control unit 55, 56, 57 may be configured to control the amount of heat supplied by the heating means 18, 18', 118a, 218a, 318a based on the determined temperature and optionally also based on the predetermined glass transition temperature of the resin 17.

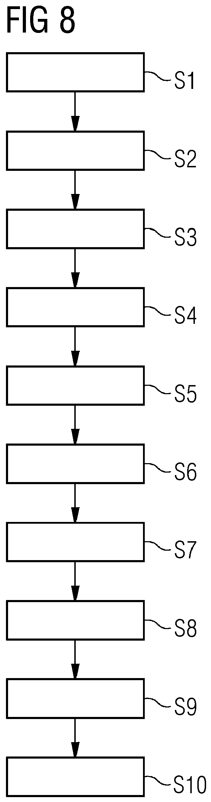

Fig. 8 shows a flow chart illustrating the method for manufacturing a blade 3 of the wind turbine 1 of Fig. 1 by use of the mold arrangement 8, 8'.

In a first step S1 of the method, a lower mold 9, 9' is provided.

In a second step S2 of the method, a fiber lay-up 16, 16' is arranged in the lower mold 9, 9'. Optionally, also one or more pre-cast elements such as a pre-cast beam 22 (Fig. 3) may be arranged in the lower mold 9, 9'.

In a third step S3 of the method, a mandrel 12, 12' (e.g., multiple mandrel portions 12a, 12b) is arranged on the lower mold 9, 9'. In case of several mandrel portions 12a, 12b, a fiber lay-up 20 and/or one or more pre-cast elements such as a pre-cast web element 21 (Fig. 3) may be arranged in step S3 in a gap 19 between the mandrel portions 12a, 12b.

In a fourth step S4 of the method, a fiber lay-up 16, 16' is arranged on top of the mandrel 12, 12' (e.g., on top of the multiple mandrel portions 12a, 12b). Optionally, also one or more pre-cast elements such as a pre-cast beam 22 (Fig. 3) may be arranged on top of the mandrel 12, 12'.

In a fifth step S5 of the method, an upper mold 10, 10' is arranged on the mandrel 12, 12' and on the lower mold 9, 9'.

In a sixth step S6 of the method, the fiber lay-up 16, 16', 20 is infused with resin 17.

In a seventh step S7 of the method, optionally the temperature of the mandrel 12, 12' is determined by means of a sensor unit 58.

In an eighth step S8 of the method, optionally the amount of heat provided by the heating means 18, 18', 118a, 218a, 318a is controlled. The control is, for example, based on the temperature of the mandrel 12, 12' determined in step S7 and/or on a predetermined glass transition temperature of the used resin 17.

In a nineth step S9 of the method, heat is provided by use of the heating means 18, 18', 118a, 218a, 318a at a molding surface 14, 14', 14a, 14b, 23a, 23b, 114a, 214a, 314a of the mandrel 12, 12'.

Step S9 can be carried out before and/or during step S10.

In a tenth step S10 of the method, the resin 17 is cured.

By providing heat at the molding surface 14, 14', 14a, 14b, 23a, 23b, 114a, 214a, 314a of the mandrel 12, 12' of the mold arrangement 8, 8' before and/or during the curing in step S10 of the resin 17, a gelation and vitrification of the resin 17 can be accelerated. Hence, a solid state of the resin 17 is efficiently and reliably achieved. This is even the case in the presence of pre-casted elements 21, 22 which acts as thermal mass.

It is noted that step S9 of heating can - in addition to or instead of before and/or during step S10 - also be carried out before and/or during step S6 of infusing the resin 17.

By providing heat at the molding surface 14, 14', 14a, 14b, 23a, 23b, 114a, 214a, 314a of the mandrel 12, 12' of the mold arrangement 8, 8' before and/or during the infusion of resin 17 in step S6, a viscosity of the resin 17 can be reduced resulting in a better resin flow. Hence, dry spots are avoided and the wetting of the dry or semi-dry fiber lay-up 16, 16', 20 is improved.

Although the present invention has been described in accordance with preferred embodiments, it is obvious for the person skilled in the art that modifications are possible in all embodiments.

## Claims

1. A mold arrangement (8) for manufacturing a wind turbine blade (3) by resin (17) infusion of a fiber lay-up (16), the mold arrangement comprising a lower mold (9), an upper mold (10) for arrangement on the lower mold (9) such that an inner cavity (11) is formed between the molds (9, 10), and a mandrel (12) for arrangement in the inner cavity (11), wherein the mandrel (12) comprises a mandrel body (13) with a molding surface (14) and heating means (18) for providing heat at the molding surface (14).

2. The mold arrangement according to claim 1, wherein the heating means (118a, 218a, 318a) comprise one or more energy lines (25, 35, 45) arranged at least partially inside the mandrel body (113a, 213a, 313a), and the one or more energy lines (25, 35, 45) are configured for supplying energy (24, 34, I) towards the molding surface (114a, 214a, 314a) for providing heat at the molding surface (114a, 214a, 314a).

3. The mold arrangement according to claim 1 or 2, wherein the heating means (118a, 218a) comprise one or more pipes (25, 35) arranged at least partially inside the mandrel body (113a, 213a), and the one or more pipes (25, 35) are configured for transporting a heating medium (24, 34) towards the molding surface (114a, 214a).

4. The mold arrangement according to claim 3, wherein the heating medium (24) is a gaseous medium, and the one or more pipes (25) comprise at least one outlet (27) at the molding surface (114a) for releasing the gaseous heating medium (24) at the molding surface (114a).

5. The mold arrangement according to claim 3, wherein the heating medium (34) is a liquid medium, the one or more pipes (35) form at least one closed heating circuit (Z) for heating a heating zone (42) of the mandrel (214a), and the heating zone (42) includes at least a portion (43) of the molding surface (214a).

6. The mold arrangement according to one of claims 3 to 5, wherein the one or more pipes (25, 35) comprise multiple branches (26), bending portions (40) and/or serpentine portions (41) in a heating zone (30, 42) of the mandrel (112a, 212a), and the heating zone (30, 42) includes at least a portion (43) of the molding surface (114a, 214a).

7. The mold arrangement according to claim 1 or 2, wherein the heating means (318a) comprise one or more electrically conductive wires (45) arranged at least partially inside the mandrel body (313a), and an electrical heating element (44) arranged at the molding surface (314a) of the mandrel (312a), and wherein the one or more electrically conductive wires (45) are electrically connected with the electrical heating element (44) for supplying power (I) to the electrical heating element (44).

8. The mold arrangement according to claim 7, wherein the electrical heating element (144, 244, 344) includes a resistive element (49), a silicon element (51) and/or a graphite element (53).

9. The mold arrangement according to one of claims 1 to 8, comprising:
a control unit (55, 56, 57) for controlling an amount of heat supplied by the heating means (118a, 218a, 318a), and/or
a sensor unit (58) for determining a temperature of the mandrel (112a, 212a, 312a), wherein preferentially the control unit (55, 56, 57) is configured to control the amount of heat supplied by the heating means (118a, 218a, 318a) based on the determined temperature and/or based on a predetermined glass transition temperature of the resin (17).

10. A method for manufacturing a wind turbine blade (3), comprising the steps:
a) arranging (S1, S3, S5) a mandrel (12) and an upper mold (10) on a lower mold (9) such that the mandrel (12) is arranged in an inner cavity (11) formed between the molds (9, 10), the mandrel (12) comprising a mandrel body (13) with a molding surface (14) and heating means (18), and a fiber lay-up (16) being arranged (S2, S4) at the molding surface (14),
b) providing (S9) heat at the molding surface (14) by the heating means (18) of the mandrel (12),
c) infusing (S6) the fiber lay-up (16) with resin (17), and
d) curing (S10) the resin.

11. The method according to claim 10, comprising the step of determining (S7) a temperature of the mandrel (12), the temperature of the mandrel (12) being determined before and/or during step b).

12. The method according to claim 10 or 11, comprising the step of controlling (S8) an amount of heat supplied by the heating means (18) based on the determined temperature of the mandrel (12) and/or based on a predetermined glass transition temperature of the resin (17).

13. The method according to one of claims 10 to 12, wherein the heating means (118a, 218a, 318a) comprise one or more energy lines (25, 35, 45) arranged at least partially inside the mandrel body (113a, 213a, 313a), and the heat is provided in step b) by supplying energy (24, 34, I) through the one or more energy lines (25, 35, 45) towards the molding surface (114a, 214a, 314a).

14. The method according to one of claims 10 to 13, wherein
the heating means (118a, 218a, 318a) comprise one or more pipes (25, 35) and/or electrically conductive wires (45) arranged at least partially inside the mandrel body (113a, 213a, 313a), and
the heat is provided in step b) by
transporting a heating medium (24, 34) through the one or more pipes (25, 35) towards the molding surface (114a, 214a),
transporting a gaseous heating medium (24) through the one or more pipes (25) and releasing it at an outlet (27) at the molding surface (114a),
transporting a liquid heating medium (34) through the one or more pipes (35), the one or more pipes (35) forming at least one closed heating circuit (Z), and/or
supplying power (I) through the one or more electrically conductive wires (45) to an electrical heating element (44) arranged at the molding surface (314a).

15. The method according to one of claims 10 to 14, wherein
in step a) a pre-cast element (21, 22) is arranged at the molding surface (14a, 14b, 23a, 23b, 114a, 214a, 314a) and in contact with the fiber lay-up (16, 16', 20),
in step b) heat is provided at a heating region (30, 43) of the molding surface (14a, 14b, 23a, 23b, 114a, 214a, 314a), the pre-cast element (21, 22) being arranged adjacent to the heating region (30, 43), and
in step c) the fiber lay-up (16, 16', 20) and at least a connection region (R) of the pre-cast element (21, 22) and the fiber lay-up (16, 16', 20) are infused with resin (17).
